# EUROPEAN PATENT APPLICATION

(11) **EP 3 843 421 A1**
(43) Date of publication of application: **30.06.2021**
(21) Application number: 19219430.6
(22) Date of filing: 23.12.2019
(51) Int. Cl.: H04R 3/00, G01M 17/08

(54) **VEHICLE ONBOARD CONDITION MONITORING**

(71) Applicant: Bombardier Transportation GmbH, 10785 Berlin (DE)
(72) Inventor: Niu, Yan, 50670 Köln (DE)
(74) Representative: Cohausz & Florack

(57) **Abstract**

The present invention relates to an arrangement for determining at least one acoustic target signal emitted by at least one target component (106.1 to 106.6) of a vehicle (101), in particular, of a rail vehicle, comprising an acoustic detector arrangement (107), wherein the an acoustic detector arrangement (107) comprises an acoustic detector device (107.1), and a signal processing device (107.2). The at least one acoustic target signal has a target signal frequency composition, a target signal wavelength composition, a target signal propagation speed and a target signal amplitude. The at least one target component (106.1 to 106.6) is located at a target location of the vehicle (101), while the acoustic detector device (107.1) is located at a detector location of the vehicle (101). The acoustic detector device (107.1) is configured to capture acoustic signals, the acoustic signals comprising the at least one target signal. The acoustic detector device (107.1) comprises at least one microphone (107.4) providing a microphone signal in response to the acoustic signals. The signal processing device (107.2) is connected to the acoustic detector device (107.1) and configured to process the microphone signal. The acoustic detector device (107.1) comprises an array of microphones (107.3) including the at least one microphone (107.4), each microphone (107.4) of the array of microphones (107.3) being configured to provide a microphone signal to the signal processing device (107.2). The signal processing device (107.2) is configured to determine the at least one acoustic target signal using a filtering process, the filtering process filtering the microphone signals using a beamforming process executed as a function of the detector location and the target location.

## Description

### BACKGROUND OF THE INVENTION

The present invention relates to an arrangement for determining at least one acoustic target signal emitted by at least one target component of a vehicle, in particular, of a rail vehicle, comprising an acoustic detector arrangement, wherein the acoustic detector arrangement comprises an acoustic detector device, and a signal processing device. The at least one acoustic target signal has a target signal frequency composition, a target signal wavelength composition, a target signal propagation speed and a target signal amplitude. The at least one target component is located at a target location of the vehicle, while the acoustic detector device is located at a detector location of the vehicle. The acoustic detector device is configured to capture acoustic signals, the acoustic signals comprising the at least one target signal. The acoustic detector device comprises at least one microphone providing a microphone signal in response to the acoustic signals. The signal processing device is connected to the acoustic detector device and configured to process the microphone signal. The invention further relates to a corresponding method for determining at least one acoustic target signal emitted by at least one target component of a vehicle.

In rail vehicles, due to safety reasons, but not least because of continuous cost pressure, typically there is a requirement to detect damages or certain states of wear on vehicle components as early as possible and in good time and to take appropriate measures to prevent risks to the passengers or the environment of the vehicle. The same applies to the infrastructure used. For this reason, modern rail vehicles are often fitted with corresponding proprietary sensor units which detect signals on the vehicle, from which the actual value of certain state parameters of the vehicle can be derived, which in turn, are characteristic for a certain state of the vehicle (typically a certain state of one or more components of the vehicle).

Thus, typically, from specific vibration patterns of the vehicle structure conclusions as to the type of damage, possibly even the degree of damage of certain moving or driven components of the vehicle can be drawn. Certain vibration patterns on the vehicle can hint at, for example, a certain damage of a motor rotor, the transmission, the shafts and/or wheels etc. of the vehicle.

The problem is that the proprietary sensor units previously used in the detection are relatively expensive and complex in their implementation at or in the vicinity of different target locations of different target components of the vehicle, so that, for economic reasons, they are not suitable for widespread use.

A generic arrangement is known, for example, from DE 102014113669 A1 where, among others, the microphone of a smartphone or other mobile device carried by a user is used to capture acoustic signals within a wagon body of the vehicle. The microphone signals are then used to draw conclusions about the health condition or state of damage of components of the vehicle. One problem with this approach is that the signal to noise ratio of the acoustic target signals emitted by a target component of interest with respect to other acoustic signals is not related to this target component (i.e. noise for the purpose of evaluating the condition of this specific target component) may be fairly unfavorable. Hence, sophisticated signal processing is required to evaluate the health condition of the target component, typically requiring a solidly large base of comparison data representing certain damage related acoustic patterns for the respective target component.

### BRIEF DESCRIPTION OF THE INVENTION

The present invention is therefore based on the object to provide an arrangement and a method of the aforementioned type which do not have the above problems, or at least have them to a lesser degree, and which, in particular, in a simple manner permit a reliable and inexpensive determination of acoustic target signals emitted by a target component of a vehicle in order to simplify evaluation of the health condition of the target component.

The present invention solves this problem starting from an arrangement according to the preamble of claim 1 by the features of the characterizing part of claim 1. It further achieves this object starting from a method according to the preamble of claim 15 by the features of the characterizing part of claim 15.

The present invention is based on the technical teaching that a reliable and cost effective determination of acoustic target signals emitted by a target component of a vehicle and thereby simplified evaluation of the health condition of the target component is possible if, for determining the acoustic target signal, an array of a plurality of microphones is used which provide microphone signals to the processing device, the signal processing device then determines the respective acoustic target signal using a filtering process which involves a beamforming process filtering the microphone signals executed as a function of the detector location and the target location.

Acoustic beamforming is an acoustic signal processing or filtering technique where multiple microphone signals resulting from the same air pressure waves reaching mutually spaced microphones are suitably combined or overlaid, respectively. This results in filtered signals where the amplitude of signal components impinging on the microphones from a particular direction (also referred to herein as the direction of main sensitivity) is enhanced, whereas the amplitude of signal components impinging on the microphones from certain other directions neighboring that direction of main sensitivity is reduced in comparison to the amplitude of the signal components impinging on the microphones from the direction of main sensitivity.

Such a beamforming process of the microphone signals produced by the array of microphones, in a simple manner, allows considerably increasing the signal to noise ratio (i.e., here, the amplitude ratio of the signals stemming from the direction of main sensitivity to the signals stemming from these other directions) of the filtered signals used to determine the acoustic target signal which then greatly simplifies the evaluation of the health condition or damage state of the target component. Moreover, such a beamforming process enables so called beam steering, i.e. changing the direction of main sensitivity of the detector arrangement. Such steering typically may be achieved by simple signal processing measures. This enables determining the acoustic target signal for different target components located at different target locations using the same microphone array, thereby greatly reducing the effort for evaluating of the health condition or damage state of these different target components.

It will be appreciated that the microphones of the array may form a linear or one-dimensional array. With further embodiments, the microphones of the array may form an arbitrary multi-dimensional array (i.e., a two- or three-dimensional array) as desired and suitable for the respective determination purpose. The signals of certain ones of the microphones may be selectively disregarded in the processing as a function of the respective direction of main sensitivity. This may be particularly useful if the disregarded signals otherwise would create undesired overlays or artifacts for certain directions of main sensitivity (i.e. for certain directions of interest).

According to one aspect, the invention therefore relates to an arrangement for determining at least one acoustic target signal emitted by at least one target component of a vehicle, in particular, of a rail vehicle, comprising an acoustic detector arrangement, wherein the acoustic detector arrangement comprises an acoustic detector device, and a signal processing device. The at least one acoustic target signal has a target signal frequency composition, a target signal wavelength composition, a target signal propagation speed and a target signal amplitude. The at least one target component is located at a target location of the vehicle, whereas the acoustic detector device is located at a detector location of the vehicle. The acoustic detector device is configured to capture acoustic signals, the acoustic signals comprising the at least one target signal. The acoustic detector device comprises at least one microphone providing a microphone signal in response to the acoustic signals. The signal processing device is connected to the acoustic detector device and configured to process the microphone signal. The acoustic detector device comprises an array of microphones including the at least one microphone, each microphone of the array of microphones being configured to provide a microphone signal to the signal processing device. The signal processing device is configured to determine the at least one acoustic target signal using a filtering process, the filtering process filtering the microphone signals using a beamforming process executed as a function of the detector location and the target location.

Basically, any type of beamforming process may be used, as long as reasonable enhancement of the signal to noise ratio of the filtered signals can be achieved which ultimately allows determining the desired acoustic target signal. Especially simple variants of the invention, capable to provide meaningful results, may be achieved when the signal processing device is configured to execute the beamforming process as a function of the target signal propagation speed and/or when the signal processing device is configured to execute the beamforming process as a function of a spatial relationship, in particular, a distance, between the microphones, in particular, as a function of a distance between respective signal capturing locations of the microphones. Herewith particularly simple yet effective overlay of the microphone signals may be achieved.

At least some of the arrangements as described above take advantage of the run time difference of the acoustic air pressure waves emitted by the target component before they reach the location of the respective microphone. This is due to the specific spatial relationship between the location of the target component, which emits the target signal (with has its target signal frequency composition, target signal wavelength composition, target signal propagation speed and target signal amplitude) and the individual microphone locations.

In certain preferred and particularly simple variants, beam steering of the beamforming process happens essentially in the direction of the respective target component. Here, the signal processing device may be configured to use a delay sum beamforming process as the beamforming process.

In addition or as an alternative, the signal processing device, to determine the at least one acoustic target signal, may be configured to sum up a plurality of phase-shifted microphone signals, each phase-shifted microphone signal being established by phase-shifting one of the microphone signals by a phase-shift value. Here, each phase-shift value may be determined as a function of a location of the microphone generating the microphone signal within the array of microphones and the target signal propagation speed.

In addition or as an alternative, the signal processing device, to determine the at least one acoustic target signal, may be configured to sum up a plurality of phase-shifted microphone signals, each phase-shifted microphone signal being established by phase-shifting one of the microphone signals by a phase-shift value. Here, each phase-shift value may be determined such that a run time difference of the target signal between the at least one target component and the associated microphone is at least substantially compensated.

In further preferred variants, the signals are categorized into a reference microphone signal and a plurality related microphone signals, and the signal processing device, to determine the at least one acoustic target signal, is configured to at least phase-shift at least a part of said related microphone signals. Here, it may be provided that the signal processing device is configured to phase-shift all of the related microphone signals. It will be appreciated that the reference microphone signal may be the microphone signal of the microphone of the array experiencing the longest run time of said target signal from said at least one target component. While the reference microphone signal may be phase-shifted by a defined phase-shift value in certain embodiments, with certain other embodiments with reduced processing requirements, the reference microphone signal may not be phase-shifted at all (or phase-shifted by a phase-shift value equal to zero).

In further variants of the invention, the signal processing device comprises a delay stage introducing a respective delay into the respective one of the microphone signals to generate the respective phase-shifted microphone signal. Here, the delay stage may be configured to generate an adjustable delay. The latter enables to perform beam steering by adjusting the delay and, hence, the direction of main sensitivity of the process.

In addition or as alternative, it may be provided that the signal processing device is configured to transform the microphone signals into a frequency domain, in particular, using a Fast Fourier Transformation algorithm, and to apply a weighting factor to the transformed microphone signals to generate the respective phase-shifted microphone signal.

It will be appreciated that, with certain embodiments, the microphone signals may be stored in association with a sufficiently precise information on their respective time of generation (at the respective microphone) and an identification of the microphone where they were generated. The information on their time of generation (e.g. a time stamp, eventually even a cryptographically secured time stamp) may be an absolute time information or a relative time information (with respect to the microphone signals of the other microphones in the array). By means of this known temporal relation between the stored microphone signals it is possible to generate the phase-shift purely computationally during processing of the stored microphone signals. This allows later beam steering (i.e. steering the direction of main sensitivity) in any desired direction, i.e. towards any desired target location, from a single set of stored microphone signals by simply using different phase-shift values (selected as a function of the target location) when combining or overlaying, respectively, the stored microphone signals. In any case, the phase-shift, either using a corresponding time delay (in a time domain) or a corresponding weighting factor (in a frequency domain), may provide steering of the direction main sensitivity towards the respective target component of interest.

Generally, the adjustment of the signal processing device to the direction of main sensitivity for each of the target components located at different target locations (using the same microphone array) may be carried out in any suitable way. With preferred variants of the invention, the signal processing device is configured to adjustably define a main lobe of sensitivity of the acoustic detector arrangement, the main lobe of sensitivity defining a direction of main sensitivity of the acoustic detector arrangement. It will be appreciated in this context that the signal processing device, to determine the at least one acoustic target signal, may be configured to adjust the main lobe of sensitivity such that the direction of main sensitivity at least substantially coincides with a target direction, the target direction being defined by the detector location and the target location. Preferably, the signal processing device is configured to adjust the main lobe of sensitivity by imposing a respective phase-shift value on the microphone signals being phase-shifted. Here, each phase-shift value is preferably determined as a function of a location of the microphone generating the microphone signal within the array of microphones and the target signal propagation speed. Such an adjustment is very effective in obtaining a high signal to noise ratio in the respective target direction.

As already mentioned above, in certain variants of the invention, the arrangement may be configured to determine a corresponding acoustic target signal of more than one target component of the vehicle. Hence, in certain variants of the invention, the acoustic target signal is a first acoustic target signal, the target component is a first target component of the vehicle, and the target location is a first target location of the vehicle. The vehicle then comprises a second target component emitting a second acoustic target signal, the second target component being located at a second target location of the vehicle different from the first target location. The signal processing device may then be configured to determine the second acoustic target signal using a filtering process, wherein the filtering process filters the microphone signals using a beamforming process executed as a function of the detector location and the second target location. It will be appreciated that the beamforming process performed for the second acoustic target signal may be the same as the one used for the first acoustic target signal. It may however also be a different one (of any of the types described herein). The choice of the respective beamforming process used may in particular depend on the location and/or acoustic signal emission behavior of the respective target component.

In further preferred variants of the invention, the signal processing device, to determine the second acoustic target signal, is configured to adjust the main lobe of sensitivity such that the direction of main sensitivity at least substantially coincides with a second target direction, wherein the second target direction is defined by the detector location and the second target location. Preferably, the signal processing device is configured to adjust the main lobe of sensitivity by imposing a respective phase-shift value on the microphone signals being phase-shifted, each phase-shift value being determined as a function of a location of the microphone generating the microphone signal within the array of microphones and the target signal propagation speed.

It will of course be appreciated, that the signal processing device may be configured for determining acoustic target signals for any more than two different target components located at different target locations (again using the same microphone array). Hence, by a single acoustic detector arrangement and/or acoustic detector device, various target signals of various target components can be determined essentially simultaneously. In certain variants, parallel circuits of filtering processes, preferably in the form of spatial filters, may be provided for each target signal to be determined. In certain purely computational filtering variants, parallel and/or sequential processing of stored (and time related) microphone signals (as described above) may take place.

In further preferred variants of the invention, the beamforming process executed on the microphone signals provides a beamforming result signal. The signal processing device, to determine the acoustic target signal, may then be configured to perform a deconvolution process to the beamforming result signal. This deconvolution process may at least partially eliminate signal components unrelated to the acoustic target signal from the beamforming result signal. In order to do so, the deconvolution process, preferably comprises the application of at least one statistical approach to converge to the acoustic target signal. It will be appreciated that the signal processing device may also include any further process within the filtering process which improves convergence to the acoustic target signal.

In general, the signal processing device may be used to determine any feature from the at least one acoustic target signal, which allows drawing conclusions on the current characteristics or state of the target component. With preferred variants of the invention, the signal processing device is configured to extract at least one target signal feature from the at least one acoustic target signal, wherein the at least one target signal feature is related to the target component. In particular, the at least one target signal may be representative of an operational state of the target component.

The at least one target signal feature is preferably selected to permit conclusions on a health condition of the target component. In addition or as an alternative, the at least one target signal feature may be selected as a function of at least one operational parameter of an operational parameter group. This operational parameter group preferably consists of a running speed of the vehicle, a rotation speed of a motor driving the target component, a rotation speed of the target component, a location of the vehicle, a mileage status of the vehicle, a driving direction of the vehicle, an ambient temperature. Any of these operational parameters (alone or in arbitrary combination) may allow identifying a certain reference target signal feature (e.g. a target signal feature to be expected for the target component in a new or undamaged or still acceptably worn state), which may then be compared with the actually determined target signal feature to draw conclusions on the actual health condition of the target component.

In addition or as an alternative, the at least one target signal feature may be selected as a function of at least one physical parameter of a physical parameter group. The physical parameter group preferably consists of a resonant frequency of the target component, a geometric parameter of the target component, a composition parameter of the target component, in particular, a number of target component elements, a spatial position of the target component within the vehicle. Any of these physical operational parameters (alone or in arbitrary combination) may allow identifying a certain reference target signal feature (e.g. a target signal feature to be expected for the target component in a new or undamaged or still acceptably worn state), which may then be compared with the actually determined target signal feature to draw conclusions on the actual health condition of the target component.

The use of such target signal features is particularly helpful in planning maintenance activities of the related target component. In general, the at least one acoustic target signal emitted from the target component (and captured and processed by the signal processing device) may be used to draw conclusions on any, in a broad sense mechanical, physical or chemical, condition of the respective target component. In certain variants of the invention, the signal processing device is configured to determine a health condition parameter of the target component using the acoustic target signal, in particular, using at least one target signal feature extracted from the at least one acoustic target signal. Here, the health condition parameter may be representative of a health condition and/or a damage status of the target component. Furthermore, it can be provided, that the signal processing device, to determine the health condition parameter, is configured to analyze at least one statistical signal feature of the at least one acoustic target signal, in particular, of the at least one target signal feature. The statistical signal feature may be selected from a statistical signal feature group, wherein, the statistical signal feature group may consist of a minimum value, a lower quartile, a median, an upper quartile, a maximum value, a mean value, a standard deviation, a skewness, or a kurtosis of the at least one acoustic target signal, in particular, of the at least one target signal feature. Of course, any combination of these statistical signal features may be analyzed.

In addition or as an alternative, the signal processing device, to determine the health condition parameter, may be configured to analyze at least one signal analysis feature of the at least one acoustic target signal, in particular, of the at least one target signal feature. Herein, the signal analysis feature may be selected from a signal analysis feature group, the signal analysis feature group may consisting of a root mean square (RMS), at least one principal component, or an envelope spectrum of the at least one acoustic target signal, in particular, of the at least one target signal feature. Of course, any combination of these signal analysis features may be analyzed.

In addition or as an alternative, the signal processing device, to determine the health condition parameter, may be configured to analyze an amplitude spectrum of the microphone signals.

The determination of such a health condition parameter is particularly helpful in assessing the remaining lifetime of the target component and/or in planning maintenance activities of the related target component. Generally, the determination of a health condition of a target component of the vehicle can be carried out by any suitable means. Particularly advanced and highly effective variants of the invention to determine the health condition of the target component of interest may be achieved if the signal processing device, to determine a health condition parameter of the target component, uses at least one machine learning algorithm. Herein, the at least one machine learning algorithm may use the acoustic target signal, in particular use at least one target signal feature extracted from the at least one acoustic target signal. Further, the at least one machine learning algorithm may be selected from a machine learning algorithm group, wherein the machine learning algorithm group may consist of any one of the following or any combination thereof: a support vector machine (SVM) algorithm, a decision tree algorithm, a neural network algorithm, a multilayer neural network algorithm, a novelty detection algorithm and a deep learning algorithm. Once implemented in the determination process, such machine learning algorithm for the determination of the health condition parameter, provide sophisticated results by "self learning".

Generally, the at least one target component may be any component of the vehicle which emits characteristic acoustic signals in any operational state, in particular, in a state of progressed wear or damage. With preferred variants of the invention, the at least one target component may be one of a wheel, a wheel bearing, a gearbox, a motor, and a brake unit of the vehicle.

Moreover, the microphone array may be mounted to any suitable component or part of the vehicle. With certain embodiments, the microphone array may be mounted to a wagon body of the vehicle, in particular, in a vicinity of the at least one target component. In this context, it may be advantageous if the microphone array is mounted in such a way that a path of the acoustic target signal to the detector location is at least substantially unobstructed.

It will be appreciated that any plurality of microphones may be used in the array of microphones. The number of microphones may, in particular, depend on the required spatial resolution of the beam steering and/or the required filtering quality of the beamforming process. With preferred variants yielding particularly useful filtering results, the microphone array may comprise 2 to 50 microphones, preferably 3 to 25 microphones, more preferably 6 to 12 microphones.

Similarly, it will be appreciated that any (at least partially regular and/or at least partially irregular) spacing of the microphones may be used in the array of microphones. The mutual spacing of the microphones may, in particular, depend on the required spatial resolution of the beam steering and/or the required filtering quality of the beamforming process. With preferred variants yielding particularly useful filtering results, at least two of the microphones, in particular, all microphones, of the microphone array may be spaced from an immediately adjacent one of the microphones by a microphone distance which is ranging from 10 mm to 100 mm, preferably from 15 mm to 80 mm, more preferably from 20 mm to 50 mm.

The present invention further relates to a vehicle, in particular, a rail vehicle, comprising an arrangement according to any of the variants as described above or any combinations thereof, and a vehicle control unit connected to the acoustic detector arrangement. The vehicle control unit is configured to control operation of the vehicle as a function of the at least one acoustic target signal determined using the acoustic detector arrangement, in particular, as a function of a health condition parameter of the at least one target component derived from the at least one acoustic target signal. In addition or as alternative, the vehicle control unit is configured to provide at least one operational parameter of an operational parameter group to the signal processing device, wherein the operational parameter group consists of a running speed of the vehicle, a rotation speed of a motor driving the target component, a rotation speed of the target component, a location of the vehicle, a mileage status of the vehicle, a driving direction of the vehicle, an ambient temperature;

The present invention further relates to a method for determining at least one acoustic target signal emitted by at least one target component of a vehicle, in particular, of a rail vehicle, located at a target location of the vehicle. The at least one acoustic target signal has a target signal frequency composition, a target signal wavelength composition, a target signal propagation speed and a target signal amplitude. The method comprises capturing, at a detector location, acoustic signals, the acoustic signals comprising the at least one target signal, using at least one microphone providing at least one microphone signal in response to the acoustic signals and comprises processing the microphone signals. An array of microphones is provided including the at least one microphone, each microphone of the array of microphones providing a microphone signal. Furthermore, the at least one acoustic target signal is determined using a filtering process, the filtering process filtering the microphone signals using a beamforming process executed as a function of the detector location and the target location.

With the vehicle according to the invention or the method according to the invention, respectively, the variants and advantages described above in connection with the arrangement according to the invention can be realized to the same extent, such that reference is made to the above statements.

Further preferred embodiments of the invention become apparent from the dependent claims and the following description of preferred embodiments, which refers to the accompanying drawings.

### BRIEF DESCRIPTION OF THE DRAWINGS

- Figure 1: is a schematic side view of a preferred embodiment of the arrangement according to the invention with a preferred embodiment of the rail vehicle according to the invention which are suitable for carrying out a preferred embodiment of the method according to the invention.
- Figure 2: is a schematic sectional view of a detail of the rail vehicle of Figure 1.

### DETAILED DESCRIPTION OF THE INVENTION

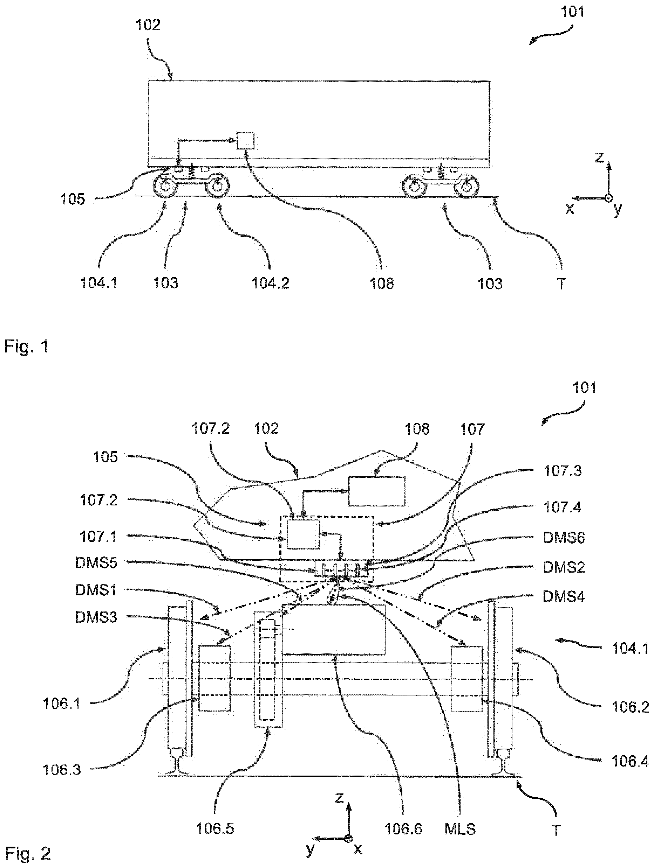

In the following, with reference to Figures 1 and 2, a preferred embodiment of the method according to the invention will be described by way of a rail vehicle 101. The rail vehicle 101 is a wagon of a train set operated with a nominal operating speed above 180 km/h, namely vₙ = 200 km/h, on a track T.

The vehicle 101 comprises a wagon body 102 which is supported in a conventional manner in the region of each of its two ends on a running gear unit in the form of a bogie 103 having two wheel units in the form of a first wheel set 104.1 and a second wheel set 104.2. It will be appreciated, however, that the present invention can also be used in conjunction with other configurations, in which the wagon body is only directly supported on one running gear. Likewise, instead of wheelsets, other wheel units, such as wheel pairs or individual wheels may be provided.

For ease of understanding of the following explanations a vehicle coordinate system x,y,z (defined by the wheel contact plane of the bogie 103) is shown in the figures, in which the x coordinate designates the vehicle longitudinal direction, the y coordinate designates the vehicle transverse direction and the z coordinate designates the vehicle height direction of rail vehicle 101, respectively.

The vehicle 101 is a vehicle for transporting passengers. Of course, in other variants of the invention, the vehicle can be used for any other transportation purpose, such as transporting cargo etc. In the present example, a condition monitoring arrangement 105 is provided to determine health conditions of various target components of the rail vehicle 101, which are especially suffering wear and/or damage over time due to operation of the rail vehicle 101.

In the present example, those target components include a first wheel 106.1 of the first wheel set 104.1, a second wheel 106.2 of the first wheel set 104.1, a first axle box 106.3 associated to the first wheel 106.1, a second axle box 106.4 associated to the second wheel 106.2, as well as a gearbox 106.5 and a motor 106.6, together driving the first wheel set 104.1. It will be appreciated however that, with other embodiments, only one or a subset of these target components 106.1 to 106.6 may be of interest. Furthermore, arbitrary other components of the vehicle 101, each emitting a corresponding acoustic target signal during operation may be of interest and, hence, supervised.

All of these target components 106.1 to 106.6 are located at different locations and, hence, define a respective target location TL1 to TL6 of the rail vehicle 101. Each of these target components 106.1 to 106.6 emits an individual characteristic acoustic target signal TS1 to TS6 the composition of which depends on the integrity or health condition of the respective target component 106.1 to 106.6. Each of the individual target signal TS1 to TS6 has a target signal frequency composition TSFC, a target signal wavelength composition TSWC, a target signal propagation speed TSPS and a target signal amplitude TSA.

In order to determine a health condition for each of these target components 106.1 to 106.6, the condition monitoring arrangement 105 comprises an acoustic detector arrangement 107, wherein the acoustic detector arrangement 107 in turn comprises an acoustic detector device 107.1 and a signal processing device 107.2. The acoustic detector device 107.1 is mounted to an underside of the wagon body 102 at a defined detector location DL in a vicinity of the first wheel set 104.1. One acoustic detector arrangement 107 may be sufficient per vehicle or per bogie 103. Furthermore, identical or similar acoustic detector arrangements may be mounted to the vehicle 101 in the vicinity of further wheelsets, in particular, each of the other wheelsets, of the vehicle 101 as it is indicated by the dashed contours in Figure 1.

The acoustic detector device 107.1 comprises an array of microphones 107.3 with a plurality of mutually spaced microphones 107.4. Each of the microphones 107.4 of the array of microphones 107.3, in a well-known manner, provides an individual microphone signal MS in response to the acoustic air pressure waves impinging on the detector component of the microphone 107.4 at its microphone location ML.

It will be appreciated that the microphones 107.4 of the array of microphones 107.3 may form a linear or one-dimensional array. With further embodiments, the microphones 107.4 of the array of microphones 107.3 may form an arbitrary multi-dimensional array (i.e., a two- or three-dimensional array) as desired and suitable for the respective determination purpose to be performed by the condition monitoring arrangement 105 as will be described in further detail below.

It will be further appreciated that, with other variants, eventually supervising other target components of the vehicle 101, the microphone array 107.3 may be mounted to any other suitable component or part of the vehicle 101. It will be understood that it may be particularly advantageous if the microphone array 107.3 is mounted in such a way that a path of the respective acoustic target signal TS1 to TS6 to the detector location DL is at least substantially unobstructed in order to avoid artefacts induced by obstructions in the acoustic pressure wave path. The signals of certain ones of the microphones 107.3 may be selectively disregarded in the processing as a function of the respective direction of main sensitivity as will also be described in further detail below. This may be particularly useful if the disregarded microphone signals otherwise would create undesired overlays or artifacts for certain directions of main sensitivity DMS (i.e. for certain directions of interest).

The signal processing device 107.2 determines the acoustic target signals TS1 to TS6 using a filtering process which filters the microphone signals MS using an acoustic beamforming (or just beamforming) process BFP executed as a function of the detector location DL and the respective target location TL1 to TL6. As explained above, acoustic beamforming is an acoustic signal processing or filtering technique where multiple microphone signals MS resulting from the same air pressure waves reaching the mutually spaced microphones 107.4 are suitably combined or overlaid, respectively. This results in filtered signals BFS where the amplitude of signal components impinging on the microphones 107.4 from a particular direction (also referred to herein as the direction of main sensitivity DMS) is enhanced, whereas the amplitude of signal components impinging on the microphones 107.4 from certain other directions neighboring that direction of main sensitivity DMS is reduced in comparison to the amplitude of the signal components impinging on the microphones 107.4 from the direction of main sensitivity DMS.

Basically, any type of beamforming process BPS may be used, as long as reasonable enhancement of the signal to noise ratio of the filtered signals BFS can be achieved which ultimately allows determining the desired acoustic target signal TS1 to TS6. In the present example, the signal processing device 107.2 is configured to execute the beamforming process BFP on the microphone signals MS as a function of the target signal propagation speed TSPS (of the respective target signal TS1 to TS6) and as a function of a spatial relationship, in particular, a distance, between the microphones 107.4, in particular, as a function of a distance between respective signal capturing locations (also referred to as the respective microphone location ML) of the microphones 107.4. Herewith, particularly simple yet effective overlay of the microphone signals MS may be achieved with good signal to noise ratio (SNR) enhancement.

In the present example, beam steering of the beamforming process BFP is executed such that the respective direction of main sensitivity DMS created by the beamforming process BFP is essentially in the direction of the respective target component. To do so, in the present example, the signal processing device 107.2 is be configured to use a delay sum beamforming process DSBFP as the beamforming process BFP.

The present example takes advantage of the run time difference RTD of the acoustic air pressure waves emitted by the respective target component 106.1 to 106.6 before they reach the location of the respective microphone 107.4. This is due to the specific spatial relationship between the respective target location TL1 to TL6 of the respective target component 106.1 to 106.6, which emits the respective target signal TS1 to TS6 (which has its respective target signal frequency composition TSFC, target signal wavelength composition TSWC, target signal propagation speed TSPS and target signal amplitude TSA) and the individual microphone locations ML.

In certain variants, the signal processing device 107.2, to determine the respective acoustic target signal TS1 to TS6, is configured to sum up a plurality of phase-shifted microphone signals PSMS, each phase-shifted microphone signal PSMS being established by phase-shifting one of the microphone signals MS by a phase-shift value PSV. Here, each phase-shift value PSV may be determined as a function of the microphone location ML of the microphone 107.4 generating the microphone signal MS within the array of microphones 107.3 and the target signal propagation speed TSPS.

In the present example, for each target signal TS1 to TS6, each phase-shift value PSV is determined such that the run time difference RTD of the respective target signal TS1 to TS6 between the respective target component 106.1 to 106.6 and the associated microphone 107.4 is at least substantially compensated.

In certain variants, the microphone signals MS are categorized into a reference microphone signal REFMS and a plurality related microphone signals RELMS. It will be appreciated that the reference microphone signal may be the microphone signal MS of the microphone 107.4 experiencing the longest run time of the respective target signal TS1 to TS6 from the respective target component 106.1 to 106.6. To determine the respective acoustic target signal TS1 to TS6, the signal processing device 107.2 may then phase-shift all of the related microphone signals RELMS, while the reference microphone signal REFMS may either also be phase-shifted by a defined phase-shift value PSV or (with certain embodiments with reduced processing requirements) may not be phase-shifted at all (or phase-shifted by a phase-shift value PSV equal to zero).

To generate the respective phase-shifted microphone signal PSMS, the signal processing device 107.2 of certain variants may comprise a delay stage introducing a respective delay MSD into the respective one of the microphone signals MS. Here, the delay stage of the signal processing device 107.2 may be configured to generate an adjustable delay MSD which enables to perform beam steering by adjusting the delay MSD and, hence, the direction of main sensitivity DMS of the process to one of the directions of main sensitivity DMS1 to DMS6.

In further examples, the signal processing device 107.2 may transform the microphone signals MS into a frequency domain, in particular, using a Fast Fourier Transformation (FFT) algorithm, and to apply a weighting factor WF to the transformed microphone signals TMS to generate the respective phase-shifted microphone signal PSMS.

It will be appreciated that, with certain variants, the microphone signals MS may be stored (e.g. in the signal processing device 107.2) in association with a sufficiently precise information ITG on their respective time of generation (at the respective microphone 107.4) and an identification MID of the microphone 107.4 where they were generated. The information on their time of generation ITG (e.g. a time stamp, eventually even a cryptographically secured time stamp) may be an absolute time information or a relative time information (with respect to the microphone signals MS of the other microphones 107.4 in the array 107.3).

By means of this known temporal relation between the stored microphone signals MS it is possible to generate the phase-shift purely computationally during processing of the stored microphone signals MS. This allows later beam steering (i.e. steering the direction of main sensitivity DMS) in any desired direction DMS1 to DMS6, i.e. towards any desired target location TL, from a single set of stored microphone signals MS by simply using different phase-shift values PVS (selected as a function of the respective target location TL of the respective target component 106.1 to 106.6) when combining or overlaying, respectively, the stored microphone signals MS. In any case, the phase-shift, either using a corresponding time delay MSD (in a time domain) or a corresponding weighting factor WF (in a frequency domain), may provide steering of the direction main sensitivity DMS towards the respective target component 106.1 to 106.6 of interest.

Generally, setting or adjusting the direction of main sensitivity DMS1 to DMS6 for each of the target components 106.1 to 106.6 located at different target locations TL (using the same microphone array 107.3) may be carried out in any suitable way. In the present example, the signal processing device 107.2 adjustably defines a main lobe of sensitivity MLS of the acoustic detector arrangement 107, wherein the main lobe MLS of sensitivity defines the direction of main sensitivity DMS of the acoustic detector arrangement 107 (as shown in Figure 2 for the direction of main sensitivity DMS6 associated to the motor 106.6).

It will be appreciated that the signal processing device 107.2, to determine the respective acoustic target signal TS1 to TS6, may adjust the respective main lobe MLS of sensitivity such that the respective direction of main sensitivity DMS1 to DMS6 at least substantially coincides with a target direction which is defined by the detector location DL and the respective target location TL1 to TL6. As described above, the signal processing device may adjust the main lobe of sensitivity MLS by imposing a respective phase-shift value PSV on the microphone signals MS. Here, each phase-shift value may be determined as a function of the microphone location ML of the microphone 107.4 (generating the microphone signal MS) and the target signal propagation speed TSPS of the respective target signal TS1 to TS6. This approach is very effective in obtaining a high signal to noise ratio SNR in the respective target direction.

As becomes apparent from the above, typically, the arrangement 105 is configured to determine a corresponding acoustic target signal TS1 to TS6 of more than one target component of the vehicle, here target components 106.1 to 106.2. Hence, the acoustic target signal TS1 is a first acoustic target signal, and the first wheel 106.1 is a first target component of the vehicle 101, while the target location of the first wheel 106.1 is a first target location of the vehicle 101. The second wheel 106.2 represents a second target component emitting a second acoustic target signal TS2, wherein the second wheel 106.2 representing the second target component is located at a second target location of the vehicle which is different from the first target location.

As described above, the signal processing device 107.2 determines the first acoustic target signal TS1 using a filtering process which filters the microphone signals MS using a beamforming process BFP executed as a function of the detector location DL and the first target location of the first wheel 106.1. Furthermore, similarly, the signal processing device 107.2 determines the second acoustic target signal TS2 using a filtering process which filters the (typically same) microphone signals MS using a beamforming process BFP executed as a function of the detector location DL and the second target location of the second wheel 106.2. Similar is done for all the other target components 106.3 to 106.6.

The signal processing device 107.2 may adjust the respective main lobe of sensitivity MLS such that the direction of main sensitivity DMS at least substantially coincides with the respective target direction is defined by the detector location DL and the respective target location of the respective target component 106.1 to 106.6. Preferably, the signal processing device 107.2 adjusts the main lobe of sensitivity MLS by imposing a respective phase-shift value PSV on the microphone signals MS being phase-shifted as described above.

It will be appreciated that the beamforming process BFP performed for the second acoustic target signal TS2 (or any of the other target signals TS3 to TS6) may be the same as the one used for the first acoustic target signal TS1. It may however also be a different one (of any of the types described herein). The choice of the respective beamforming process BFP used may in particular depend on the location and/or acoustic signal emission behavior of the respective target component 106.1 to 106.6.

Hence, using a single acoustic detector arrangement 107, in particular, only a single acoustic detector device 107.1, various target signals TS of various target components can be determined essentially simultaneously. In certain variants, parallel circuits of filtering processes, preferably in the form of spatial filters, may be provided for each target signal to be determined. In certain purely computational filtering variants, parallel and/or sequential processing of stored (and time related) microphone signals MS (as described above) may take place in the signal processing device 107.2.

It will be appreciated that any plurality of microphones 107.4 may be used in the array of microphones 107.3. The number of microphones 107.4 may depend on the required spatial resolution of the beam steering and/or the required filtering quality of the beamforming process BFP. With preferred variants yielding particularly useful filtering results, the microphone array 107.3 comprises 2 to 50 microphones, preferably 3 to 25 microphones, more preferably 6 to 12 microphones.

Similarly, it will be appreciated that any (at least partially regular and/or at least partially irregular) spacing of the microphones 107.4 may be used in the array of microphones 107.3. The mutual spacing of the microphones 107.4 may, in particular, depend on the required spatial resolution of the beam steering and/or the required filtering quality of the beamforming process BFP. With preferred variants yielding particularly useful filtering results, at least two of the microphones 107.4, in particular, all microphones 107.4, of the microphone array 107.3 may be spaced from an immediately adjacent one of the microphones 107.4 by a microphone distance MD which is ranging from 10 mm to 100 mm, preferably from 15 mm to 80 mm, more preferably from 20 mm to 50 mm.

In the present example, the beamforming process BFP executed on the microphone signals MS provides a respective beamforming result signal BFRS1 to BFRS6. To determine the respective acoustic target signal TS1 to TS6, the signal processing device 107.2 then performs a deconvolution process DCVP to the respective beamforming result signal BFRS1 to BFRS6. This deconvolution process DCVP may at least partially eliminate signal components unrelated to the respective acoustic target signal TS1 to TS6 from the respective beamforming result signal BFRS1 to BFRS6. In order to do so, the deconvolution process, preferably comprises the application of at least one statistical approach to converge to the respective acoustic target signal TS1 to TS6. It will be appreciated that the signal processing device 107.2 may also perform any further process within the filtering process which improves convergence to the respective acoustic target signal TS1 to TS6.

In general, the signal processing device 107.2 may be used to determine any feature from the respective acoustic target signal TS1 to TS6, which allows drawing conclusions on the current characteristics or state of the respective target component 106.1 to 106.6. With preferred variants, the signal processing device 107.2 extracts at least one target signal feature TSF (related to respective target component 106.1 to 106.6) from the respective acoustic target signal TS1 to TS6. Typically, here, the respective target signal TS1 to TS6 is representative of an operational state of the respective target component 106.1 to 106.6.

The respective target signal feature TSF is preferably selected to permit conclusions on a health condition of the respective target component 106.1 to 106.6. The target signal feature TSF may be selected as a function of at least one operational parameter of an operational parameter group which may consist of a running speed of the vehicle 101, a rotation speed of the motor 106.6, a rotation speed of the target component 106.1 to 106.6, a location of the vehicle 101, a mileage status of the vehicle, a driving direction of the vehicle, an ambient temperature. Any of these operational parameters (alone or in arbitrary combination) may allow identifying a certain reference target signal feature RTSF (e.g. a target signal feature to be expected for the target component in a new or undamaged or still acceptably worn state), which may then be compared with the actually determined target signal feature to draw conclusions on the actual health condition of the respective target component 106.1 to 106.6.

The respective target signal feature TSF may also be selected as a function of at least one physical parameter of a physical parameter group which may consist of a resonant frequency of the target component 106.1 to 106.6, a geometric parameter of the target component 106.1 to 106.6, a composition parameter of the target component 106.1 to 106.6, in particular, a number of target component elements, a spatial position a spatial position of the target component 106.1 to 106.6. Any of these physical parameters (alone or in arbitrary combination) may allow identifying a certain reference target signal feature RTSF (e.g. a target signal feature to be expected for the respective target component 106.1 to 106.6in a new or undamaged or still acceptably worn state), which may then be compared with the respective actually determined target signal feature to draw conclusions on the actual health condition of the target component 106.1 to 106.6.

The use of such target signal features TSF is particularly helpful in planning maintenance activities of the related target component 106.1 to 106.6. In general, the respective acoustic target signal TS1 to TS6 emitted from the respective target component 106.1 to 106.6 (and captured and processed by the signal processing device 107.2) may be used to draw conclusions on any, in a broad sense mechanical, physical or chemical, condition of the respective target component 106.1 to 106.6.

In certain variants, the signal processing device 107.2 determines a respective health condition parameter HCP1 to HCP6 of the respective target component 106.1 to 106.6 using the respective acoustic target signal TS1 to TS6, in particular, using at least one target signal feature TSF extracted from the respective acoustic target signal TS1 to TS6. Here, the respective health condition parameter HCP1 to HCP6 may be representative of a health condition and/or a damage status of the respective target component 106.1 to 106.6.

Furthermore, to determine the respective health condition parameter HCP1 to HCP6, the signal processing device 107.2 may analyze at least one statistical signal feature SSF of the respective acoustic target signal TS1 to TS6. In particular, the signal processing device 107.2 may analyze at least one statistical signal feature SSF of the at least one target signal feature TSF extracted from the respective acoustic target signal TS1 to TS6. The statistical signal feature may be selected from a statistical signal feature group, which may consist of a minimum value, a lower quartile, a median, an upper quartile, a maximum value, a mean value, a standard deviation, a skewness, or a kurtosis of the respective acoustic target signal TS1 to TS6, in particular, of the at least one target signal feature TSF extracted from the respective acoustic target signal TS1 to TS6. Of course, any combination of these statistical signal features SSF may be analyzed.

The signal processing device 107.2 may also determine the respective health condition parameter HCP1 to HCP6 by analyzing at least one signal analysis feature SAF of the respective acoustic target signal TS1 to TS6. Again, to this end, the signal processing device 107.2 may analyze at least one signal analysis feature SAF of the at least one target signal feature TSF extracted from the respective acoustic target signal TS1 to TS6. In the present example, the signal analysis feature SAF may be selected from a signal analysis feature group which may consist of a root mean square (RMS), at least one principal component, or an envelope spectrum of the at least one acoustic target signal, in particular, of the at least one target signal feature TSF extracted from the respective acoustic target signal TS1 to TS6. Of course, here as well, any combination of these signal analysis features SAF may be analyzed.

Moreover, the signal processing device 107.2 may also analyze an amplitude spectrum of the microphone signals MS to determine the respective health condition parameter HCP1 to HCP6.

The determination of the respective health condition parameter HCP1 to HCP6 is particularly helpful in assessing the remaining lifetime of the respective target component and/or in planning maintenance activities of the related target component 106.1 to 106.6. Generally, the determination of a health condition of the respective target component 106.1 to 106.6 of the vehicle 101 can be carried out by any suitable means. Particularly advanced and highly effective variants of the invention to determine the health condition of the respective target component 106.1 to 106.6 may be achieved if the signal processing device 107.2 uses at least one machine learning algorithm to do so.

In the present example, the machine learning algorithm(s) may use the acoustic target signal TS1 to TS6, in particular use at least one target signal feature TSF extracted from the respective acoustic target signal TS1 to TS6. In principle, any desired and suitable machine learning algorithm or combinations thereof may be implemented in the signal processing device 107.2. With the present example, the machine learning algorithm(s) may be selected from a machine learning algorithm group which comprises a support vector machine (SVM) algorithm, a decision tree algorithm, a neural network algorithm, a multilayer neural network algorithm, a novelty detection algorithm and a deep learning algorithm. Once implemented in the determination process, such machine learning algorithm for the determination of the health condition parameter HCP1 to HCP6 provide increasingly sophisticated health condition assessment results by their "self-learning" behavior.

The vehicle 101 further comprises a vehicle control unit 108 connected to the acoustic detector arrangement 107. The vehicle control unit 108, among others, controls operation of the vehicle 101 as a function of the acoustic target signals TS1 to TS6 determined using the acoustic detector arrangement 107. More precisely, the control unit 108 may control operation of the vehicle 101 as a function of the respective health condition parameter HCP1 to HCP6 of the respective target component 106.1 to 106.6 derived from the respective acoustic target signal TS1 to TS6. For example, if one of the determined health condition parameters HCP1 to HCP6 indicates the presence or imminence of a critical state (eventually even a safety critical state) of the associated target component 106.1 to 106.6, then the vehicle control unit 108 may issue corresponding warnings or induce corresponding countermeasures to prevent critical situations.

Moreover, the vehicle control unit 101 may provide one or more operational parameters of an operational parameter group to the signal processing device 107.2 which may then be used in the filtering process and/or the health condition monitoring. The operational parameter group may comprise a running speed of the vehicle 101, a rotation speed of the motor 106.6 driving the target component, a rotation speed of the target component 106.1 to 106.6, a location of the vehicle 101, a mileage status of the vehicle, a driving direction of the vehicle, an ambient temperature. Any of these operational parameters (alone or in arbitrary combination) may be used in the signal processing device 107.2 as input to the filtering process, e.g. to determine certain target signal features TSF of interest. For example, the speed of rotation of the motor 106.6 is immediately related (by the transmission ratio between the motor 106.6 and the respective target component) to the first and higher order frequencies of the acoustic signals emitted by target components driven by the motor 106.6. Hence, the target signal features TSF of interest are of the same frequencies.

The present invention has been described solely by way of examples in which bogie components of the vehicle 101 are monitored. It will be appreciated, however, that any other target components of the vehicle 101 emitting corresponding acoustic signals that may allow drawing conclusions on the health condition of that target component.

The present invention has been described solely by way of a wagon of a train set operated with a nominal operating speed above 180 km/h. It will be appreciated, however, that the invention can also be used in the context of rail vehicles operated at any other nominal operating speed.

## Claims

1. An arrangement for determining at least one acoustic target signal emitted by at least one target component (106.1 to 106.6) of a vehicle (101), in particular, of a rail vehicle, comprising
- an acoustic detector arrangement (107),
wherein
- said an acoustic detector arrangement (107) comprises an acoustic detector device (107.1), and a signal processing device (107.2),
- said at least one acoustic target signal has a target signal frequency composition, a target signal wavelength composition, a target signal propagation speed and a target signal amplitude,
- said at least one target component (106.1 to 106.6) is located at a target location of said vehicle (101);
- said acoustic detector device (107.1) is located at a detector location of said vehicle (101);
- said acoustic detector device (107.1) is configured to capture acoustic signals, said acoustic signals comprising said at least one target signal;
- said acoustic detector device (107.1) comprises at least one microphone (107.4) providing a microphone signal in response to said acoustic signals;
- said signal processing device (107.2) is connected to said acoustic detector device (107.1) and configured to process said microphone signal;
**characterized in that**
- said acoustic detector device (107.1) comprises an array of microphones (107.3) including said at least one microphone (107.4), each microphone (107.4) of said array of microphones (107.3) being configured to provide a microphone signal to said signal processing device (107.2);
- said signal processing device (107.2) is configured to determine said at least one acoustic target signal using a filtering process, said filtering process filtering said microphone signals using a beamforming process executed as a function of said detector location and said target location.

2. The arrangement of claim 1, wherein
- said signal processing device (107.2) is configured to execute said beamforming process as a function of said target signal propagation speed,
and/or
- said signal processing device (107.2) is configured to execute said beamforming process as a function of a spatial relationship, in particular, a distance, between said microphones (107.4), in particular, as a function of a distance between respective signal capturing locations of said microphones (107.4).

3. The arrangement of claim 2, wherein
- said signal processing device (107.2) is configured to use a delay sum beamforming process as said beamforming process;
and/or
- said signal processing device (107.2), to determine said at least one acoustic target signal, is configured to sum up a plurality of phase-shifted microphone signals, each phase-shifted microphone signal being established by phase-shifting one of said microphone signals by a phase-shift value, each phase-shift value being determined as a function of a location of said microphone (107.4) generating said microphone signal within said array of microphones (107.3) and said target signal propagation speed,
and/or
- said signal processing device (107.2), to determine said at least one acoustic target signal, is configured to sum up a plurality of phase-shifted microphone signals, each phase-shifted microphone signal being established by phase-shifting one of said microphone signals by a phase-shift value, each phase-shift value being determined such that a run time difference of said target signal between said at least one target component (106.1 to 106.6) and the associated microphone (107.4) is at least substantially compensated.

4. The arrangement of claim 3, wherein
- said microphone signals are categorized into a reference microphone signal and a plurality related microphone signals;
- said signal processing device (107.2), to determine said at least one acoustic target signal, is configured to at least phase-shift at least a part of said related microphone signals, in particular, to phase-shift all of said related microphone signals;
wherein, in particular,
- said reference microphone signal is the microphone signal of the microphone (107.4) of said array experiencing the longest run time of said target signal from said at least one target component (106.1 to 106.6)
and/or
- said reference microphone signal is not phase-shifted.

5. The arrangement of claim 3 or 4, wherein
- said signal processing device (107.2) comprises a delay stage introducing a respective delay into the respective one of said microphone signals to generate said respective phase-shifted microphone signal, wherein, in particular, said delay stage is configured to generate an adjustable delay,
and/or
- said signal processing device (107.2) is configured to transform said microphone signals into a frequency domain, in particular, using a Fast Fourier Transformation algorithm, and to apply a weighting factor to said transformed microphone signals to generate said respective phase-shifted microphone signal.

6. The arrangement of any one of claims 1 to 5, wherein
- said signal processing device (107.2) is configured to adjustably define a main lobe of sensitivity of said acoustic detector arrangement (107), said main lobe of sensitivity defining a direction of main sensitivity of said acoustic detector arrangement (107);
- said signal processing device (107.2), to determine said at least one acoustic target signal, is configured to adjust said main lobe of sensitivity such that said direction of main sensitivity at least substantially coincides with a target direction, said target direction being defined by said detector location and said target location;
wherein, in particular,
- said signal processing device (107.2) is configured to adjust said main lobe of sensitivity by imposing a respective phase-shift value on said microphone signals being phase-shifted, each phase-shift value being determined as a function of a location of said microphone (107.4) generating said microphone signal within said array of microphones (107.3) and said target signal propagation speed.

7. The arrangement of any one of claims 1 to 6, wherein
- said acoustic target signal is a first acoustic target signal, said target component (106.1 to 106.6) is a first target component (106.1 to 106.6) of said vehicle (101), and said target location is a first target location of said vehicle (101);
- said vehicle (101) comprises a second target component (106.1 to 106.6) emitting a second acoustic target signal, said second target component (106.1 to 106.6) being located at a second target location of said vehicle (101) different from said first target location;
- said signal processing device (107.2) is configured to determine said second acoustic target signal using a filtering process, said filtering process filtering said microphone signals using a beamforming process executed as a function of said detector location and said second target location.

8. The arrangement of claim 6 and 7, wherein
- said signal processing device (107.2), to determine said second acoustic target signal, is configured to adjust said main lobe of sensitivity such that said direction of main sensitivity at least substantially coincides with a second target direction, said second target direction being defined by said detector location and said second target location;
wherein, in particular,
- said signal processing device (107.2) is configured to adjust said main lobe of sensitivity by imposing a respective phase-shift value on said microphone signals being phase-shifted, each phase-shift value being determined as a function of a location of said microphone (107.4) generating said microphone signal within said array of microphones (107.3) and said target signal propagation speed.

9. The arrangement of any one of claims 1 to 8, wherein
- said beamforming process executed on said microphone signals provides a beamforming result signal;
- said signal processing device (107.2), to determine said second acoustic target signal, is configured to perform a deconvolution process to said beamforming result signal,
- said deconvolution process at least partially eliminating signal components unrelated to said acoustic target signal from said beamforming result signal, said deconvolution process, in particular, comprising applying at least one statistical approach to converge to said acoustic target signal.

10. The arrangement according to any one of claims 1 to 9, wherein
- said signal processing device (107.2) is configured to extract at least one target signal feature from said at least one acoustic target signal;
- said at least one target signal feature being related to said target component (106.1 to 106.6), in particular, being representative of an operational state of said target component (106.1 to 106.6) ;
wherein, in particular,
- said at least one target signal feature is selected to permit conclusions on a health condition of said target component (106.1 to 106.6);
and/or
- said at least one target signal feature is selected as a function of at least one operational parameter of an operational parameter group, said operational parameter group consisting of a running speed of said vehicle (101), a rotation speed of a motor driving said target component (106.1 to 106.6), a rotation speed of said target component (106.1 to 106.6), a location of said vehicle (101), a mileage status of the vehicle, a driving direction of the vehicle, an ambient temperature;
and/or
- said at least one target signal feature is selected as a function of at least one physical parameter of a physical parameter group, said physical parameter group consisting of a resonant frequency of said target component (106.1 to 106.6), a geometric parameter of said target component (106.1 to 106.6), a composition parameter of said target component (106.1 to 106.6), in particular, a number of target component elements, a spatial position, of said target component (106.1 to 106.6).

11. The arrangement according to any one of claims 1 to 10, wherein
- said signal processing device (107.2) is configured to determine a health condition parameter of said target component (106.1 to 106.6) using said acoustic target signal, in particular, using at least one target signal feature extracted from said at least one acoustic target signal,
- said health condition parameter being representative of a health condition and/or a damage status of said target component (106.1 to 106.6);
wherein, in particular,
- said signal processing device (107.2), to determine said health condition parameter, is configured to analyze at least one statistical signal feature of said at least one acoustic target signal, in particular, of said at least one target signal feature, said statistical signal feature being selected from a statistical signal feature group, said statistical signal feature group consisting of a minimum value, a lower quartile, a median, an upper quartile, a maximum value, a mean value, a standard deviation, a skewness, a kurtosis of said at least one acoustic target signal, in particular, of said at least one target signal feature;
and/or
- said signal processing device (107.2), to determine said health condition parameter, is configured to analyze at least one signal analysis feature of said at least one acoustic target signal, in particular, of said at least one target signal feature, said signal analysis feature being selected from a signal analysis feature group, said signal analysis feature group consisting of a root mean square (RMS), at least one principal component, an envelope spectrum of said at least one acoustic target signal, in particular, of said at least one target signal feature;
and/or
- said signal processing device (107.2), to determine said health condition parameter, is configured to analyze an amplitude spectrum of said microphone signals;

12. The arrangement according to any one of claims 1 to 11, wherein
- said signal processing device (107.2) is configured to determine a health condition parameter of said target component (106.1 to 106.6) using at least one machine learning algorithm, said at least one machine learning algorithm using said acoustic target signal, in particular, using at least one target signal feature extracted from said at least one acoustic target signal;
wherein, in particular,
- said at least one machine learning algorithm is selected from a machine learning algorithm group, said machine learning algorithm group consisting of a support vector machine (SVM) algorithm, a decision tree algorithm, a neural network algorithm, a multilayer neural network algorithm, a deep learning algorithm.

13. The arrangement according to any one of claims 1 to 11, wherein
- said at least one target component (106.1 to 106.6) is one of a wheel, a wheel bearing, a gearbox, a motor, and a brake unit of said vehicle (101);
and/or
- said microphone array is mounted to a wagon body of said vehicle (101), in particular, in a vicinity of said at least one target component (106.1 to 106.6), in particular, in such a way that a path of said acoustic target signal to said detector location is at least substantially unobstructed;
and/or
- said microphone array comprises 2 to 50 microphones (107.4), preferably 3 to 25 microphones (107.4), more preferably 6 to 12 microphones (107.4);
and/or
- at least two of said microphones (107.4), in particular, all microphones (107.4), of said microphone array are spaced from an immediately adjacent one of said microphones (107.4) by a microphone distance, said microphone distance ranging from 10 mm to 100 mm, preferably from 15 mm to 80 mm, more preferably from 20 mm to 50 mm.

14. A vehicle, in particular, a rail vehicle, comprising
- an arrangement according to any one of claims 1 to 13, and
- a vehicle control unit connected to said acoustic detector arrangement (107),
wherein, in particular,
- said vehicle control unit is configured to control operation of said vehicle (101) as a function of said at least one acoustic target signal determined using said acoustic detector arrangement (107), in particular, as a function of a health condition parameter of said at least one target component (106.1 to 106.6) derived from said at least one acoustic target signal;
and/or
- said vehicle control unit is configured to provide at least one operational parameter of an operational parameter group to said signal processing device (107.2), said operational parameter group consisting of a running speed of said vehicle (101), a rotation speed of a motor driving said target component (106.1 to 106.6), a rotation speed of said target component (106.1 to 106.6), a location of said vehicle (101), a mileage status of the vehicle, a driving direction of said vehicle, an ambient temperature.

15. A method for determining at least one acoustic target signal emitted by at least one target component (106.1 to 106.6) of a vehicle (101), in particular, of a rail vehicle, located at a target location of said vehicle (101), said at least one acoustic target signal having a target signal frequency composition, a target signal wavelength composition, a target signal propagation speed and a target signal amplitude, the method comprising
- capturing, at a detector location, acoustic signals, said acoustic signals comprising said at least one target signal, using at least one microphone (107.4) providing at least one microphone signal in response to said acoustic signals;
- processing said microphone signal;
**characterized in that**
- an array of microphones (107.3) is provided including said at least one microphone (107.4), each microphone (107.4) of said array of microphones (107.3) providing a microphone signal;
- said at least one acoustic target signal is determined using a filtering process, said filtering process filtering said microphone signals using a beamforming process executed as a function of said detector location and said target location.
